# EUROPÄISCHE PATENTSCHRIFT

(11) **EP 4 301 489 B1**
(45) Veröffentlichungstag und Bekanntmachung des Hinweises auf die Patenterteilung: **08.07.2026**
(21) Anmeldenummer: 22710986.5
(22) Anmeldetag: 28.02.2022
(51) Int. Cl.: B01D 46/00, B01D 46/10, B01D 46/24, B01D 46/64

(54) **FILTERELEMENT, FILTERELEMENTANORDNUNG UND FILTERSYSTEM MIT EINER FILTERELEMENTANORDNUNG**
FILTER ELEMENT, FILTER ELEMENT ARRANGEMENT AND FILTER SYSTEM HAVING A FILTER ELEMENT ARRANGEMENT
ÉLÉMENT FILTRANT, AGENCEMENT D'ÉLÉMENT FILTRANT ET SYSTÈME DE FILTRE AYANT UN AGENCEMENT D'ÉLÉMENT FILTRANT

(30) Priorität: 04.03.2021 DE 102021105231
(43) Veröffentlichungstag der Anmeldung: 10.01.2024
(73) Patentinhaber: MANN+HUMMEL GmbH, 71636 Ludwigsburg (DE)
(72) Erfinder: HORIYE, Adriano, 71634 Ludwigsburg (DE); THALMANN, Irmgard, 71336 Waiblingen (DE); BHUTI, Sharat, Bengaluru 560091 (IN)
(74) Vertreter: Mann + Hummel Intellectual Property
(86) Internationale Anmeldenummer: PCT/EP2022/054935
(87) Internationale Veröffentlichungsnummer: WO 2022/184617

(56) Entgegenhaltungen:
- WO-A1-2019/207024
- DE-U1- 202007 002 786
- US-A1- 2008 016 832
- US-A1- 2012 272 633
- US-A1- 2016 131 094

## Beschreibung

### Technisches Gebiet

Die Erfindung betrifft ein Filterelement, eine Filterelementanordnung sowie ein Filtersystem mit einer Filterelementanordnung, insbesondere zur Gasfiltration.

### Stand der Technik

In der DE 10 2016 004 316 A1 wird eine Luftfiltervorrichtung für eine Brennkraftmaschine beschrieben, die ein Hauptfilterelement und ein Sekundärelement in einem Filtergehäuse aufweist. Das Sekundärfilterelement dient im Wesentlichen dazu, bei einem Austausch des Hauptfilterelements eine Verunreinigung einer Reinseite der Filterelementanordnung mit zu filterndem Rohfluid zu verhindern.

Das Hauptfilterelement weist einen ringförmig geschlossenen Filtermediumkörper auf, dessen Wandung von dem zu reinigenden Fluid in Radialrichtung von außen nach innen durchströmt wird. Das zu reinigende Fluid durchströmt die Wandung des Filtermediumkörpers bezogen auf dessen Längsachse in Radialrichtung. Die axialen Stirnseiten des Filtermediumkörpers sind von Endscheiben strömungsdicht abgedeckt. Eine Endscheibe weist eine mit dem innenliegenden Strömungsraum kommunizierende, zentrale Öffnung für die axiale Strömungsführung des Fluids auf, die gegenüberliegende Endscheibe ist dagegen geschlossen ausgebildet und schließt den innenliegenden Strömungsraum axial nach außen dicht ab. An der offen ausgebildeten Endscheibe ist ein Ring angeformt, der sich axial nach außen erstreckt und das Filterelement im montierten Zustand am Filtergehäuse abdichtet und abstützt.

Das Sekundärelement weist eine Platte mit einer umlaufenden Dichtung zum radialen Abdichten gegenüber dem Filtergehäuse auf. Zum Positionieren des Sekundärelements innerhalb des Rings an der Endscheibe des Hauptelements weist das Sekundärelement am Umfang der Platte radial abstehende Eingriffsabschnitte auf, mit denen es formschlüssig in korrespondierende Gegeneingriffsabschnitte in der Endscheibe des Hauptfilterelements eingreift.

Aus der WO 2019/207024 A1 ist ein Rundfilterelement bekannt, das eine Endscheibe aufweist und einen Formkörper, welcher den von einem Filtermediumkörper radial umschlossenen Innenraum axial begrenzt, und eine außen am Formkörper angeordnete Dichtscheibe umfasst, wobei in den Formkörper eine Aufnahmemulde und in die Dichtscheibe eine Aufnahmeöffnung zur Aufnahme eines Stützelementes eingebracht sind.

Aus der Schrift DE 20 2007 002 786 U1 ist ein Fluidfilter bekannt mit einem Filterelement, das in ein Filtergehäuse einsetzbar ist, wobei das Filterelement mindestens ein Montagehilfselement aufweist, dem ein korrespondierendes, gehäuseseitiges Montagehilfselement zugeordnet ist, derart, dass das gehäuseseitige Montagehilfselement und das filterseitige Montagehilfselement in Einbaulage ineinandergreifen.

US 2012/272633 A1 betrifft einen Luftreiniger, der ein Gehäuse und eine herausnehmbare und austauschbare Primärfilterpatrone umfasst.

Die US 2016/131094 A1 zeigt einen Luftfilter, umfassend ein zu öffnendes Filtergehäuse mit einem Einlass für zu reinigende Luft, einen Auslass für gereinigte Luft, ein Filterelement, das austauschbar mit dem Filtergehäuse angeordnet ist und ein am Filterelement befestigtes Stützelement. Das Stützelement ist dem Filtermedium abgewandt und weist eine seitliche Stützfläche auf, die einen zylindrischen Querschnitt und/oder einen Querschnitt mit einem sich in Richtung der Elementachse ändernden Querschnitt aufweist.

Eine Filterpatrone, ein Sicherheitselement und eine Flüssigkeitsreinigungsvorrichtung werden in der US 2008/016832 A1 beschrieben. Die Flüssigkeitsreinigerbaugruppe umfasst im Allgemeinen ein Gehäuse mit einem Deckel und einem primären Flüssigkeitsreinigerabschnitt.

### Offenbarung der Erfindung

Eine Aufgabe der Erfindung ist es, ein verbessertes Filterelement, insbesondere ein verbessertes Hauptelement und/oder ein verbessertes Sekundärelement, zu schaffen.

Eine weitere Aufgabe der Erfindung ist, eine Filterelementanordnung mit wenigstens einem verbesserten Filterelement anzugeben.

Eine weitere Aufgabe der Erfindung ist, ein Filtersystem mit einer verbesserten Filterelementanordnung anzugeben.

Die vorgenannten Aufgaben werden nach einem Aspekt der Erfindung gelöst mit einem Filterelement, insbesondere Hauptelement, insbesondere zur Gasfiltration, mit einem Filtermediumkörper, dessen Wandung von dem zu reinigenden Fluid bezogen auf eine Längsachse des Filtermediumkörpers in Radialrichtung durchströmbar ist, mit jeweils einer Endscheibe an den gegenüberliegenden Stirnseiten des Filtermediumkörpers. An einer Stirnseite einer der Endscheiben ist wenigstens ein sich in axialer Richtung parallel zur Längsachse erstreckendes Eingriffsmittel zum Kontaktieren eines weiteren in axialer Richtung folgenden Filterelements vorgesehen.

Nach einem weiteren Aspekt der Erfindung werden die Aufgaben gelöst durch ein Filterelement, insbesondere Sekundärelement, insbesondere zur Gasfiltration, mit einem Filtermediumkörper und einer Dichteinrichtung zum radialen Abdichten des Filterelements gegenüber einem Filtergehäuse, wobei eine Durchströmungsrichtung eines zu filternden Fluids durch den Filtermediumkörper senkrecht zu einer von der Dichteinrichtung aufgespannten Ebene positioniert ist. Die Dichteinrichtung weist wenigstens ein sich in axialer Richtung senkrecht zu der Ebene erstreckendes Eingriffsmittel auf.

Nach einem weiteren Aspekt der Erfindung werden die Aufgaben gelöst durch eine Filterelementanordnung, mit einem ersten Filterelement, insbesondere Hauptelement, mit einem ersten Filtermediumkörper, dessen Wandung von dem zu reinigenden Fluid bezogen auf eine Längsachse des Filtermediumkörpers in Radialrichtung durchströmbar ist, mit jeweils einer Endscheibe an den gegenüberliegenden Stirnseiten des Filtermediumkörpers, und mit einem zweiten Filterelement, insbesondere Sekundärelement, mit einem zweiten Filtermediumkörper, und einer Dichteinrichtung zum radialen Abdichten des Filterelements gegenüber einem Filtergehäuse, wobei eine Durchströmungsrichtung eines zu filternden Fluids durch den zweiten Filtermediumkörper senkrecht zu einer von der Dichteinrichtung aufgespannten Ebene positioniert ist. An einer ersten Stirnseite einer der Endscheiben des ersten Filterelements ist wenigstens ein sich in axialer Richtung parallel zur Längsachse erstreckendes erstes Eingriffsmittel vorgesehen, und die Dichteinrichtung weist wenigstens ein sich in axialer Richtung senkrecht zu der Ebene erstreckendes zweites Eingriffsmittel auf, wobei die Eingriffsmittel ineinander eingreifen.

Nach einem weiteren Aspekt der Erfindung wird die Aufgabe gelöst durch ein Filtersystem mit einem Gehäuse, in dem eine Filterelementanordnung mit einem ersten Filterelement und einem zweiten Filterelement wechselbar angeordnet ist. An einer ersten Stirnseite einer der Endscheiben des ersten Filterelements ist wenigstens ein sich in axialer Richtung parallel zu einer Längsachse erstreckendes erstes Eingriffsmittel vorgesehen und eine Dichteinrichtung des zweiten Filterelements weist wenigstens ein sich in axialer Richtung senkrecht zu einer von der Dichteinrichtung aufgespannten Ebene erstreckendes zweites Eingriffsmittel auf, wobei die Eingriffsmittel ineinander eingreifen.

Günstige Ausgestaltungen und Vorteile der Erfindung ergeben sich aus den weiteren Ansprüchen, der Beschreibung und der Zeichnung.

Es wird nach einem Aspekt der Erfindung ein Filterelement, insbesondere Hauptelement, insbesondere zur Gasfiltration, vorgeschlagen mit einem Filtermediumkörper, dessen Wandung von dem zu reinigenden Fluid bezogen auf eine Längsachse des Filtermediumkörpers in Radialrichtung durchströmbar ist, mit jeweils einer Endscheibe an den gegenüberliegenden Stirnseiten des Filtermediumkörpers. An einer Stirnseite einer der Endscheiben ist wenigstens ein sich in axialer Richtung parallel zur Längsachse erstreckendes Eingriffsmittel zum Kontaktieren eines weiteren Filterelements vorgesehen.

Vorteilhaft erlaubt das wenigstens eine Eingriffsmittel eine stabile Lagerung und Positionierung des Filterelements, insbesondere Hauptelements, in einem Gehäuse, indem dieses an einem axial folgenden Filterelement, insbesondere Sekundärelement, abgestützt werden kann, vorteilhaft sind keine separaten radialen Abstützmittel notwendig, um das Hauptelement im Gehäuse im Betrieb vor Vibrationen zu schützen. Ein Einführen des Filterelements in das Gehäuse kann hierdurch erleichtert werden.

Vorteilhaft kann das Filterelement als Rundfilterelement ausgebildet sein, bei dem der Filtermediumkörper als geschlossener Ring einen Innenraum umgibt. Das Rundfilterelement weist eine axiale Erstreckung auf und senkrecht dazu einen Querschnitt, der kreisrund sein kann, oval oder eckig. Das zu reinigende Fluid tritt in radialer Richtung, d. h. quer zu der axialen Erstreckung, durch den Filtermediumkörper bzw. das Filtermedium. Vorteilhaft kann eine Endscheibe zum Innenraum offen sein und die gegenüberliegende Endscheibe kann geschlossen sein. Der Innenraum kann eine Rohseite des Filterelements bilden, so dass das zu reinigende Fluid vom Innenraum nach außen durch den Filtermediumkörper strömt. Die Reinseite umgibt dementsprechend das Filterelement. Alternativ kann der Innenraum eine Reinseite des Filterelements bilden, so dass das zu reinigende Fluid von außen durch den Filtermediumkörper in den Innenraum strömt.

Das Filtermedium des Filtermediumkörpers kann gefaltet sein, so dass Faltenkanten in der Umfangsfläche des Filtermediumkörpers liegen. Alternativ kann das Filtermedium als Wickel ausgebildet sein, der mit einer oder mehreren aufeinanderliegenden Lagen vorgesehen ist. Das Filtermedium kann ein Filtergewebe, Filtergelege oder ein Filtervlies sein. Insbesondere kann das Filtermedium in einem Spinnvlies- oder Meltblown-Verfahren hergestellt sein. Weiter kann das Filtermedium verfilzt oder vernadelt sein. Das Filtermedium kann Naturfasern, wie Cellulose oder Baumwolle, oder Kunstfasern, beispielsweise aus Polyester, Polyvinylsulfit oder Polytetrafluorethylen, aufweisen. Die Fasern können bei der Verarbeitung in, schräg und/oder quer zur Maschinenrichtung orientiert sein. Auch kann der Filtermediumkörper aus einer Kombination unterschiedlicher Filtermedien gebildet sein.

Das wenigstens eine Eingriffsmittel kann als Ausnehmung in der Endscheibe vorgesehen sein, in die ein Eingriffsmittel des anderen Filterelements eingreifen kann. Alternativ kann das wenigstens eine Eingriffsmittel als Zapfen vorgesehen sein, der in ein entsprechendes Eingriffsmittel des anderen Filterelements eingreifen kann.

Erfindungsgemäß ist das Eingriffsmittel an einer Stirnseite mit geschlossener Endscheibe angeordnet. Vorteilhaft kann der Innenraum des Filterelements die Rohseite bilden.

Erfindungsgemäß ist das Eingriffsmittel als Ausnehmung ausgebildet. Insbesondere kann das Eingriffsmittel als Ausnehmung in einem Randbereich der Endscheibe ausgebildet sein. Dieser Bereich ist besonders stabil.

Eine Ausnehmung ist als eine Art Nut, etwa in U- oder V-Form, in einem Material mit einer offenen Seite radial nach außen ausgestaltet.

Gemäß einer günstigen Ausgestaltung kann kann das Eingriffsmittel in einem Bereich der Endscheibe angeordnet sein, in dem das Filtermedium bzw. der Filtermediumkörper eingebettet ist. Dieser Bereich ist besonders stabil, so dass beim Zusammenstecken von zwei Filterelementen Beschädigungen der Endscheibe vermieden werden können.

Gemäß einer günstigen Ausgestaltung kann das wenigstens eine Eingriffsmittel als Ausnehmung in einem Rahmen, insbesondere aus einem Kunststoffmaterial, eines Filterelementes vorgesehen sein, in die ein Eingriffsmittel des anderen Filterelements eingreifen kann. Alternativ kann das wenigstens eine Eingriffsmittel als Zapfen vorgesehen sein, der in ein entsprechendes Eingriffsmittel des anderen Filterelements eingreifen kann.

Nach einem weiteren Aspekt der Erfindung wird ein Filterelement, insbesondere Sekundärelement, insbesondere zur Gasfiltration, vorgeschlagen mit einem Filtermediumkörper und einer Dichteinrichtung zum radialen Abdichten des Filterelements gegenüber einem Filtergehäuse, wobei eine Durchströmungsrichtung eines zu filternden Fluids durch den Filtermediumkörper senkrecht zu einer von der Dichteinrichtung aufgespannten Ebene positioniert ist. Die Dichteinrichtung weist wenigstens ein sich in axialer Richtung senkrecht zu der Ebene erstreckendes Eingriffsmittel auf.

Vorteilhaft erlaubt das wenigstens eine Eingriffsmittel eine stabile Lagerung und Positionierung eines Filterelements, insbesondere Hauptelements, an dem Filterelement, insbesondere Sekundärelement, in einem Gehäuse. Vorteilhaft sind keine separaten radialen Abstützmittel notwendig, um das Hauptelement im Gehäuse im Betrieb vor Vibrationen zu schützen. Ein Einführen des Filterelements, insbesondere Hauptelements, in das Gehäuse kann hierdurch erleichtert werden.

Der Querschnitt des Filterelements, insbesondere Sekundärelements, kann kreisrund, oval oder eckig sein. Insbesondere kann der Querschnitt passend zum Querschnitt des anderen Filterelements ausgebildet sein.

Das Filtermedium des Filtermediumkörpers kann gefaltet sein, so dass Faltenkanten in einer Stirnfläche des Filtermediumkörpers liegen. Alternativ kann das Filtermedium lagenweise ausgebildet sein, wobei eine oder mehrere aufeinanderliegende Lagen vorgesehen sein können. Das Filtermedium kann ein Filtergewebe, Filtergelege oder ein Filtervlies sein. Insbesondere kann das Filtermedium in einem Spinnvlies- oder Meltblown-Verfahren hergestellt sein. Weiter kann das Filtermedium verfilzt oder vernadelt sein. Das Filtermedium kann Naturfasern, wie Cellulose oder Baumwolle, oder Kunstfasern, beispielsweise aus Polyester, Polyvinylsulfit oder Polytetrafluorethylen, aufweisen. Die Fasern können bei der Verarbeitung in, schräg und/oder quer zur Maschinenrichtung orientiert sein. Auch kann der Filtermediumkörper aus einer Kombination unterschiedlicher Filtermedien gebildet sein.

Das wenigstens eine Eingriffsmittel ist als Zapfen ausgebildet. Alternativ kann das wenigstens eine Eingriffsmittel als Ausnehmung ausgebildet sein.

Erfindungsgemäß ist das wenigstens eine Eingriffsmittel in einem Bereich der Dichteinrichtung außerhalb des Filtermediums angeordnet. Die Dichteinrichtung ist als Platte mit einer umlaufenden Dichtung ausgebildet. Diese Positionierung des wenigstens einen Eingriffsmittels erlaubt eine ungestörte Funktion des Filtermediums. Die Platte weist eine Mehrzahl von Öffnungen auf, so dass der Filtermediumkörper stabil darauf liegen kann und Fluid durch den Filtermediumkörper und die Platte strömen kann. Die Platte kann vorzugsweise eine Art Gitterstruktur aufweisen mit einem im Bereich der Dichtung umlaufenden Rand. Die Platte kann vorzugsweise aus einem festen Kunststoffmaterial, beispielsweise Polyamid, gefertigt sein.

Erfindungsgemäß ist das wenigstens eine Eingriffsmittel als Zapfen ausgebildet. Das wenigstens eine Eingriffsmittel kann eine Demontagehilfe aufweisen. Vorteilhaft kann über eine Länge des Zapfens ein Abstand zwischen axial aneinandergrenzenden Filterelementen eingestellt werden. Die Demontagehilfe erlaubt ein einfaches Lösen einer Steckverbindung zwischen dem Filterelement, insbesondere Sekundärelement, und einem weiteren Filterelement, insbesondere Hauptelement, das mit dem Eingriffsmittel in Kontakt ist. In einer günstigen Ausgestaltung ist die Demontagehilfe mit einer Ausnehmung in Form eines Hinterschnittes ausgebildet, um mit einem Werkzeug oder manuell formschlüssig eine Demontagekraft aufbringen zu können.

Nach einem weiteren Aspekt der Erfindung wird eine Filterelementanordnung vorgeschlagen, mit einem ersten Filterelement, insbesondere Hauptelement, mit einem ersten Filtermediumkörper, dessen Wandung von dem zu reinigenden Fluid bezogen auf eine Längsachse des Filtermediumkörpers in Radialrichtung durchströmbar ist, mit jeweils einer Endscheibe an den gegenüberliegenden Stirnseiten des Filtermediumkörpers, und mit einem zweiten Filterelement, insbesondere Sekundärelement, mit einem zweiten Filtermediumkörper und einer Dichteinrichtung zum radialen Abdichten des zweiten Filterelements gegenüber dem Filtergehäuse, wobei eine Durchströmungsrichtung eines zu filternden Fluids durch den zweiten Filtermediumkörper senkrecht zu einer von der Dichteinrichtung aufgespannten Ebene positioniert ist. An einer ersten Stirnseite einer der Endscheiben des ersten Filterelements ist wenigstens ein sich in axialer Richtung parallel zur Längsachse erstreckendes Eingriffsmittel vorgesehen, und die Dichteinrichtung des zweiten Filterelements weist wenigstens ein sich in axialer Richtung senkrecht zu der Ebene erstreckendes zweites Eingriffsmittel auf, wobei die ersten und zweiten Eingriffsmittel ineinander eingreifen.

Vorteilhaft erlaubt das wenigstens eine Eingriffsmittel eine stabile Lagerung und Positionierung des ersten Filterelements, insbesondere Hauptelements, an dem zweiten Filterelement, insbesondere Sekundärelement, in dem Gehäuse. Vorteilhaft sind keine separaten radialen Abstützmittel notwendig, um das erste Filterelement im Gehäuse im Betrieb vor Vibrationen zu schützen. Ein Einführen des ersten Filterelements in das Gehäuse kann hierdurch erleichtert werden.

Das erste Filterelement, insbesondere das Hauptelement, kann in axialer Richtung das weitere Filterelement, insbesondere das Sekundärelement, in die Endlage drücken und das weitere Filterelement in der Betriebslage fixieren. Das weitere Filterelement begrenzt die Bewegungsfreiheit des Filterelementes in Axial- und Radialrichtung.

Vorteilhaft kann das zweite Filterelement im Gehäuse verbleiben, wenn das erste Filterelement gewechselt wird. Bei Bedarf kann auch das zweite Filterelement ausgewechselt werden.

Gemäß einer günstigen Ausgestaltung kann bei zusammengesetztem ersten und zweiten Filterelement die Stirnseite der Endscheibe mit dem wenigstens einen ersten Eingriffsmittel von einer der ersten Stirnseite zugewandten zweiten Stirnseite des zweiten Filterelements mit einem lichten Abstand beabstandet sein. Vorteilhaft kann der lichte Abstand über die Eingriffsmittel eingestellt werden.

Nach einem weiteren Aspekt der Erfindung wird ein Filtersystem, insbesondere zur Luftfilterung, vorgeschlagen, mit einem Gehäuse, in dem eine Filterelementanordnung mit einem ersten Filterelement und einem zweiten Filterelement wechselbar angeordnet ist. An einer ersten Stirnseite einer der Endscheiben des ersten Filterelements ist wenigstens ein sich in axialer Richtung parallel zu einer Längsachse erstreckendes Eingriffsmittel vorgesehen. Eine Dichteinrichtung des zweiten Filterelements weist wenigstens ein sich in axialer Richtung senkrecht zu einer von der Dichteinrichtung aufgespannten Ebene erstreckendes zweites Eingriffsmittel auf, wobei die ersten und zweiten Eingriffsmittel ineinander eingreifen.

Erfindungsgemäß weist das Gehäuse in einem Gehäuseteil wenigstens ein Gehäuse-Eingriffsmittel auf, an dem das zweite Filterelement montierbar ist, insbesondere aufsteckbar oder einsteckbar ist.

Günstigerweise kann das zweite Filterelement stabil und vibrationssicher im Gehäuse positioniert werden.

Erfindungsgemäß greifen das wenigstens eine zweite Eingriffsmittel und das wenigstens eine Gehäuse-Eingriffsmittel ineinander ein. Eine sichere Positionierung des zweiten Filterelements ist ermöglicht.

Gemäß einer günstigen Ausgestaltung kann das wenigstens eine Gehäuse-Eingriffsmittel als sich in axialer Richtung erstreckender Zapfen ausgebildet sein, der in eine Öffnung des wenigstens zweiten Eingriffsmittels eingreift. Optional kann das Sekundärelement als Eingriffsmittel einen Zapfen aufweisen, der in das Gehäuse-Eingriffsmittel hineinragen kann, wenn dieses als Ausnehmung ausgebildet ist.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Figur 1: in perspektivischer Ansicht ein Filtersystem in Explosionsdarstellung nach einem Ausführungsbeispiel der Erfindung;
- Figur 2: in einem Längsschnitt das Filtersystem in Explosionsdarstellung nach Figur 1;
- Figur 3: eine Detailansicht einer Filteranordnung in einem teilgeschnittenen Gehäuse nach Figur 1;
- Figur 4: eine Detailansicht der Filteranordnung nach Figur 3;
- Figur 5: ein Längsschnitt des Filtersystems mit im Gehäuse in Endposition eingesetzten Filterelementen nach Figur 1.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

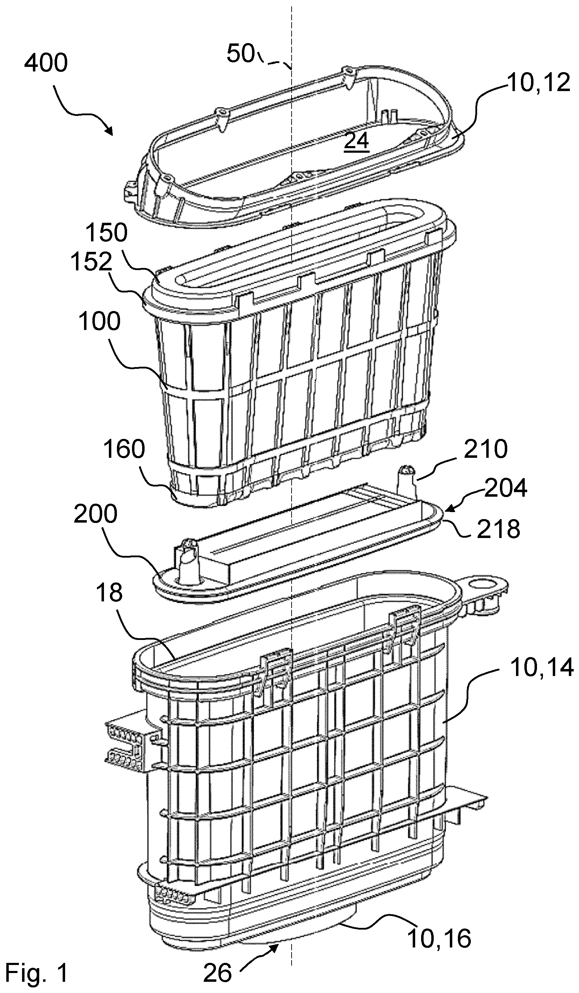

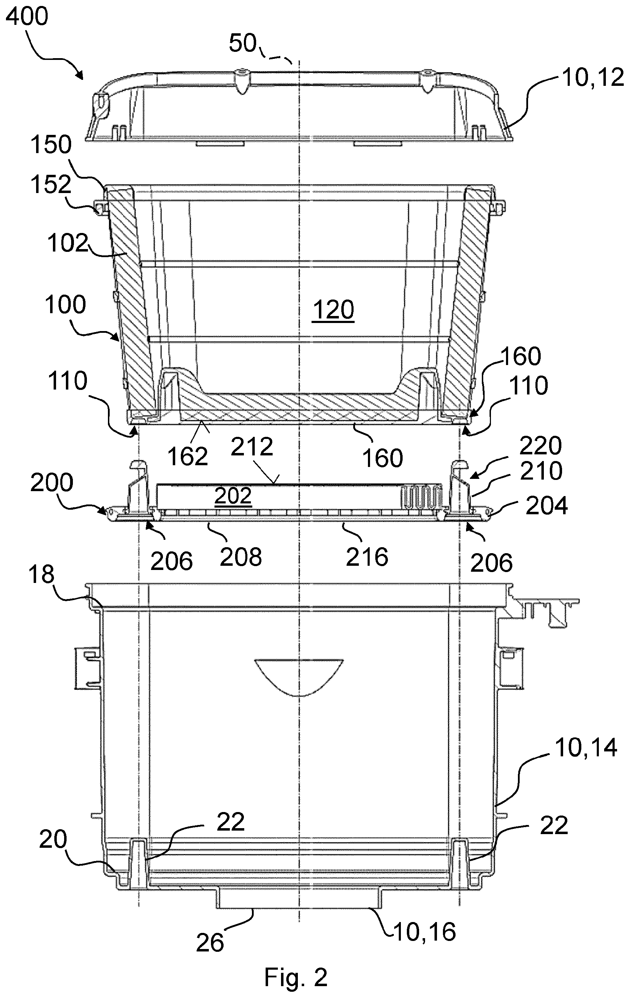

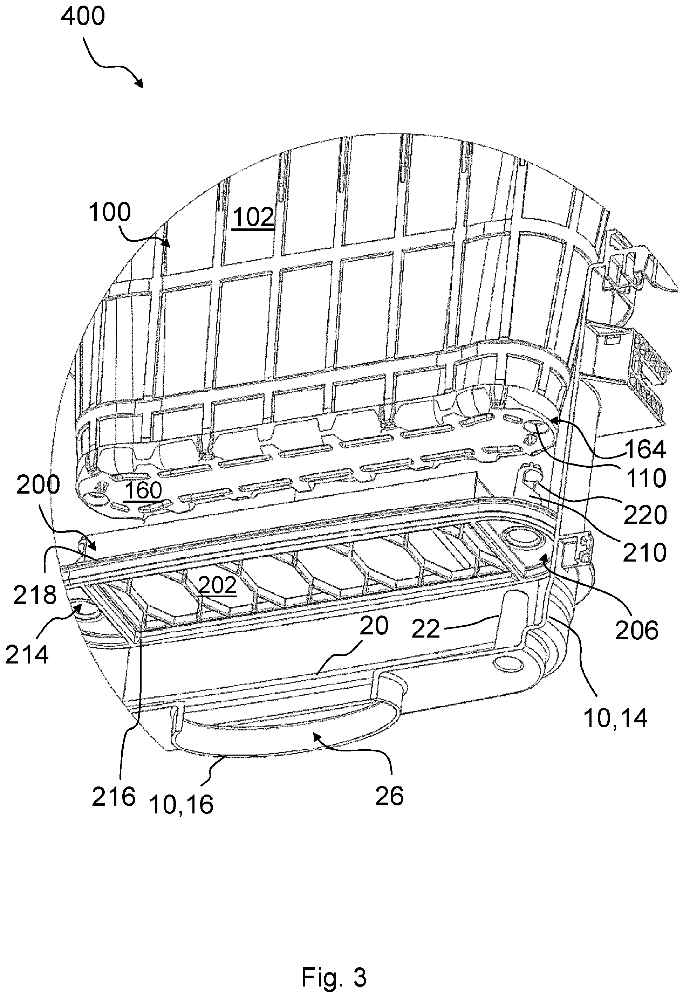

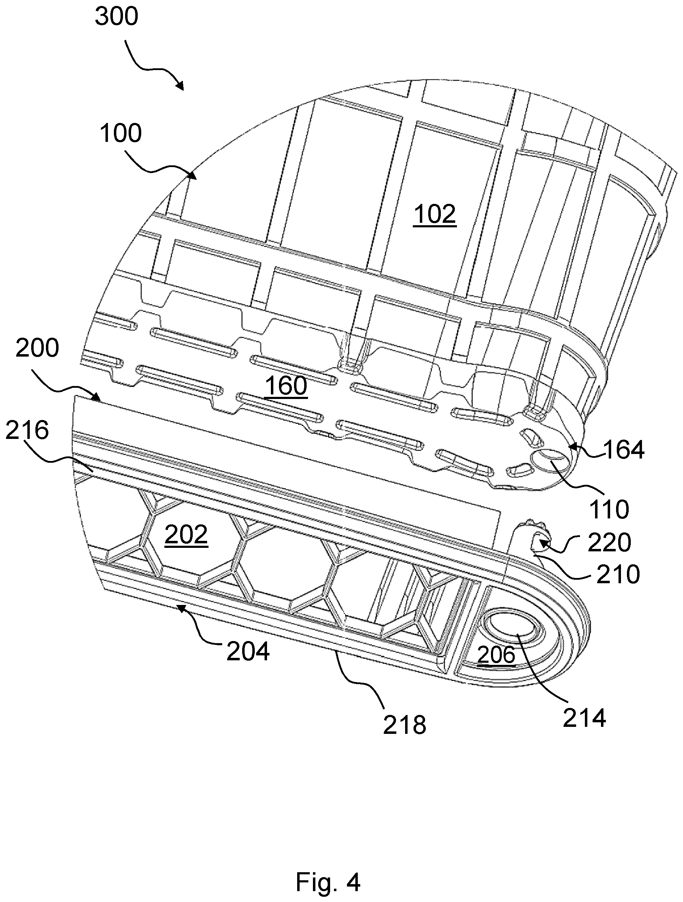

Zur Erläuterung der Erfindung zeigt Figur 1 ein Ausführungsbeispiel in perspektivischer Ansicht eines Filtersystems 400 mit einem ersten und einem zweiten Filterelement 100, 200 in einem Gehäuse 10 in Explosionsdarstellung, während Figur 2 das in Explosionsdarstellung abgebildete Filtersystem 400 in einem Längsschnitt zeigt. Figur 3 zeigt eine Detailansicht einer Filterelementanordnung 300 der Filterelemente 100, 200 im teilgeschnittenen Gehäuse 10, und Figur 4 zeigt eine Detailansicht der Filterelementanordnung 300 nach Figur 3.

Das Filtersystem 400 dient beispielsweise zur Gasfiltration, insbesondere zur Luftfiltration. Das Filtersystem 400 weist ein Gehäuse 10 mit einem ersten Gehäuseteil 12 und einem zweiten Gehäuseteil 14 auf. Das erste Gehäuseteil 12 ist hier als Haube ausgebildet und weist in diesem Beispiel einen Fluideinlass 24 auf. Das zweite Gehäuseteil 14 ist hier als Gehäusetopf ausgebildet und weist am Boden einen Stutzen 16 auf, der einen Fluidauslass 26 aufweist.

In dem Gehäuse 10 ist im Strömungspfad des Fluids eine Filterelementanordnung 300 angeordnet mit einem ersten Filterelement 100, das ein Hauptelement bildet, und einem zweiten Filterelement 200, das ein Sekundärelement bildet. Die Filterelemente 100, 200 sind in Längsrichtung 50 aufeinander folgend angeordnet. Beide Filterelemente 100, 200 können wechselbar angeordnet vorgesehen sein.

Das erste Filterelement 100 ist als Rundfilterelement mit einem geschlossenen Filtermediumkörper 102 aus einem Filtermedium ausgebildet und weist in der Längsrichtung 50 beispielsweise einen ovalen Querschnitt auf. Der Querschnitt kann sich ausgehend von einer ersten Endscheibe 150 in Richtung einer zweiten Endscheibe 160 verringern, so dass das erste Filterelement 100 konisch zuläuft. Bevorzugt jedoch weist das erste Filterelement 100 einen ovalen oder elliptischen Querschnitt auf. Das erste Filterelement 100 weist eine ovale Basisfläche auf. Der Querschnitt kann alternativ ein rechteckiger Querschnitt mit verrundeten Ecken, ein elliptischer Querschnitt oder ein aus mehreren Kreisbögen gebildeter Querschnitt sein. Das erste Filterelement 100 kann ein Mittelrohr umfassen, das einen Innenraum 120 des ersten Filterelements 100 umgrenzt.

Das Filtermedium des Filtermediumkörpers 102 ist beispielsweise so gefaltet, dass die äußeren Faltenkanten in einer äußere Umfangsfläche und innere Faltenkanten in einer inneren Umfangsfläche liegen. Die Faltenenden sind in den jeweiligen Endscheiben 150, 160 eingebettet.

Die Endscheiben 150, 160 können mit dem Filtermedium verschmolzen, verklebt oder verschweißt sein.

Die erste, offene Endscheibe 150 des ersten Filterelements 100 kann stabil zwischen dem ersten Gehäuseteil 12 und dem zweiten Gehäuseteil 14 eingespannt werden, wenn das erste Gehäuseteil 12 mit dem zweiten Gehäuseteil 14 verbunden wird. Die erste Endscheibe 150 sitzt auf einem Absatz 18 des zweiten Gehäuseteils 14 auf und dichtet dabei radial und/oder axial mit einem umlaufenden Bund 152 Rohseite gegen Reinseite ab.

Die erste Endscheibe 150 des ersten Filterelements 100 ist offen ausgebildet und ist beispielsweise als Ring aus geschäumtem Polyurethan (PUR) an dem Filtermediumkörper 102 angeordnet. Die zweite Endscheibe 160 ist fluiddicht verschlossen. Die Endscheibe 160 kann aus Kunststoff gebildet sein, beispielsweise aus PUR.

An einer äußeren Stirnseite 162 der zweiten Endscheibe 160 des ersten Filterelements 100 sind zwei sich in axialer Richtung parallel zu der Längsachse 50 erstreckende Eingriffsmittel 110 vorgesehen. Die Eingriffsmittel 110 sind als Ausnehmungen in der zweiten Endscheibe 160 ausgebildet und im Randbereich 164 derselben dort angeordnet, wo das Filtermedium bzw. der Filtermediumkörper 102 eingebettet ist.

Der Innenraum 120 des ersten Filterelements bildet in diesem Beispiel die Rohseite des Filterelements 100. Das zu reinigende Fluid strömt durch den Fluideinlass 24 des ersten Gehäuseteils 12 in das erste Filterelement 100 und tritt radial durch den Filtermediumkörper 102 in den Außenbereich des Filterelements 100.

Das zweite Filterelement 200 ist als Flachfilter ausgebildet mit einem Filterelementkörper 202, der beispielsweise gefaltet ist und der auf einer Dichteinrichtung 204 angeordnet ist. Die Dichteinrichtung 204 weist eine Platte 216 auf, die von einer randseitig umlaufenden Dichtung 218 umgeben ist, so dass das zweite Filterelement radial gegen das Gehäuse 10 abgedichtet werden kann. Äußere Faltenkanten des Filtermediums liegen in einer Stirnseite 212, die dem ersten Filterelement 100 zugewandt ist, während die inneren Faltenkanten an die Platte 216 grenzen. Das Filtermedium kann umspritzt sein oder mit einem Band abgedichtet sein.

Die Dichteinrichtung 204 des zweiten Filterelements 200 weist zwei sich in axialer Richtung senkrecht zu einer von der Dichteinrichtung 204 aufgespannten Ebene 208 erstreckende zweite Eingriffsmittel 210 in Form von Zapfen auf, wobei die Eingriffsmittel 110 des ersten Filterelements 100 und die Eingriffsmittel 210 des zweiten Filterelements 200 ineinander eingreifen, wenn die beiden Filterelemente 100, 200 als Filterelementanordnung 300 zusammengeführt werden.

Die Eingriffsmittel 210 sind in einem Bereich 206 der Dichteinrichtung 204 außerhalb des Filtermediumkörpers 202 angeordnet. Die Platte 216 weist eine Mehrzahl von Öffnungen auf, so dass der Filtermediumkörper 202 stabil darauf liegen kann und Fluid durch den Filtermediumkörper 202 und die Platte 216 strömen kann.

Die zapfenförmigen Eingriffsmittel 210 sind, wie in Figur 3 und 4 zu erkennen ist, hohl ausgebildet, so dass zapfenförmige Gehäuse-Eingriffsmittel 22 am Boden des zweiten Gehäuseteils 14 des Gehäuses 10 in eine Öffnung 214 an ihrer Basis eingreifen können.

Die zapfenförmigen Eingriffsmittel 210 des zweiten Filterelements 200 weisen in ihrem Umfang eine als Ausnehmung ausgebildete Demontagehilfe 220 auf, so dass das zweite Filterelement 200 bei Bedarf von den Gehäuse-Eingriffselementen 22 abgezogen werden kann, beispielsweise bei einem Wechsel des zweiten Filterelements 200.

Das zu reinigende Fluid tritt durch einen Fluideinlass 24 in das Filtersystem 400 und den Innenraum 120 des ersten Filterelements 100 ein, strömt radial durch den Filtermediumkörper 102 des Filterelements 100 in den Außenraum zwischen Gehäuse 10 und Filtermediumkörper 102, durch den durch den lichten Abstand 302 gebildeten Freiraum zum zweiten Filterelement 200 und strömt durch dessen Filtermediumkörper 202 zum Fluidauslass 26 im Stutzen 16.

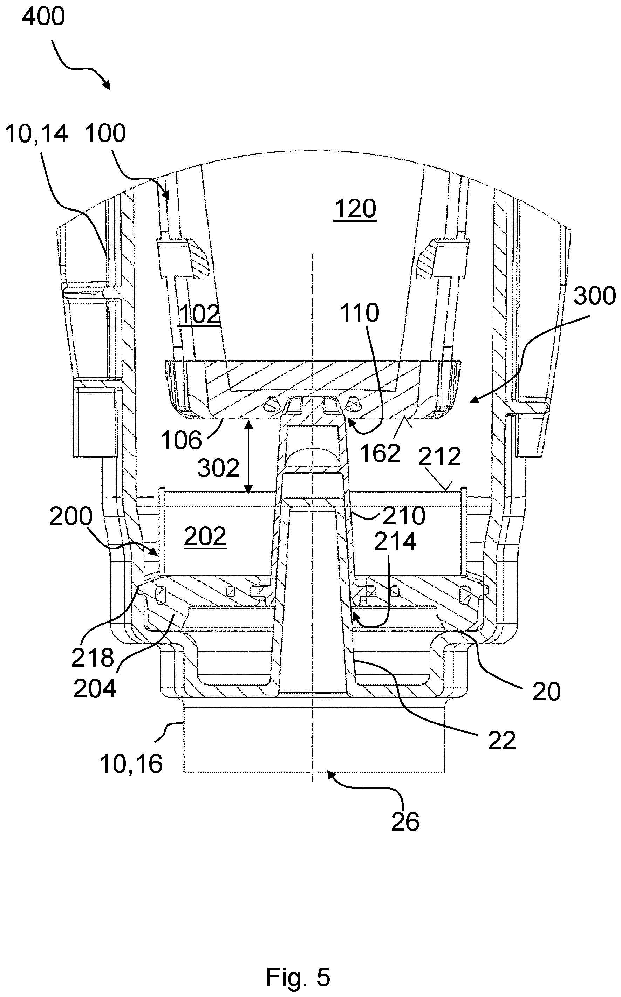

Figur 5 zeigt einen Längsschnitt des Filtersystems 400 mit in Endposition im Gehäuse 10 eingesetzten Filterelementen 100, 200 nach Figur 1.

Das zweite Filterelement 200 ist bis zum Boden des zweiten Gehäuseteils 14 des Gehäuses 10 eingeführt und sitzt auf einem Absatz 20 des Gehäuseteils 14 oberhalb des den Fluidauslass 26 aufweisenden Stutzens 16 auf und dichtet mit seiner um die Platte 216 der Dichteinrichtung 204 umlaufenden Dichtung 218 gegen die Innenseite des Gehäuseteils 12 ab. Dabei sitzt das zweite Filterelement 200 mit seinen Eingriffsmitteln 210 fest auf den zapfenförmigen Gehäuse-Eingriffsmitteln 22 am Boden des Gehäuses 10 stabil auf. Die Gehäuse-Eingriffsmittel 22 führen das zweite Filterelement 200 beim Einsetzen in das Gehäuse 10 und fixieren das zweite Filterelement 200 im Betrieb des Filtersystems 400.

Das erste Filterelement 100 ist auf das zweite Filterelement 200 aufgesetzt. Die Eingriffsmittel 210 des zweiten Filterelements 200 greifen dabei in die als Ausnehmung ausgebildeten Eingriffsmittel 110 des ersten Filterelements 100 ein. Bei in der Endposition im Gehäuse 10 zusammengesetztem ersten und zweiten Filterelement 100, 200 ist die Stirnseite 162 der Endscheibe 160 zu der zweiten Stirnseite 212 des zweiten Filterelements 200 mit einem lichten Abstand 302 beabstandet.

Das zweite Filterelement 200 stützt dabei das erste Filterelement mittels der Eingriffsmittel 210 ab und verhindert durch seine stabile Fixierung an den Gehäuse-Eingriffsmitteln 22 zuverlässig Bewegungen des ersten Filterelements 100 auch bei Vibrationen im Betrieb des Filtersystems 400.

## Patentansprüche

1. Filtersystem (400), insbesondere zur Gasfiltration, mit einer Filterelementanordnung (300) aus einem ersten Filterelement (100), insbesondere Hauptelement, und einem zweiten Filterelement (200), insbesondere Sekundärelement, und mit einem Gehäuse (10), in dem die Filterelementanordnung (300) wechselbar angeordnet ist,
das erste Filterelement (100) aufweisend einen Filtermediumkörper (102), dessen Wandung von einem zu reinigenden Fluid bezogen auf eine Längsachse (50) des Filtermediumkörpers (102) in Radialrichtung durchströmbar ist, mit jeweils einer Endscheibe (150, 160) an den gegenüberliegenden Stirnseiten des Filtermediumkörpers (102),
das zweite Filterelement (200) aufweisend einen Filtermediumkörper (202) und eine Dichteinrichtung (204) zum radialen Abdichten des Filterelements (200) gegenüber dem Filtergehäuse (10), wobei eine Durchströmungsrichtung des zu filternden Fluids durch den Filtermediumkörper (202) senkrecht zu einer von der Dichteinrichtung (204) aufgespannten Ebene (208) positioniert ist, wobei die Dichteinrichtung (204) als Platte (216) mit einer randseitig umlaufenden Dichtung (218) ausgebildet ist und wobei das Filterelement (200) als Flachfilterelement ausgebildet ist,
wobei an der äußeren Stirnseite (162) einer geschlossenen Endscheibe (160) des ersten Filterelements (100) zwei sich in axialer Richtung parallel zur Längsachse (50) erstreckende erste Eingriffsmittel (110) angeordnet sind, wobei die ersten Eingriffsmittel (110) als Ausnehmungen ausgebildet sind und wobei die ersten Eingriffsmittel (160) in einem Randbereich (164) der Endscheibe (160) angeordnet sind, wo der Filtermediumkörper (202) eingebettet ist,
wobei die Dichteinrichtung (204) des zweiten Filterelements (200) zwei sich in axialer Richtung senkrecht zu der Ebene (208) erstreckende zweite Eingriffsmittel (210) aufweist, wobei die zweiten Eingriffsmittel (210) in einem Bereich (206) der Dichteinrichtung (204) außerhalb des Filtermediumkörpers (202) angeordnet sind, und wobei die zweiten Eingriffsmittel (210) als hohle Zapfen mit einer Öffnung (214) an einer Basis ausgebildet sind,
wobei die ersten und zweiten Eingriffsmittel (110, 210) ineinander eingreifen,
und wobei das Gehäuse (10) an einem Boden eines Gehäuseteils (14) zwei Gehäuse-Eingriffsmittel (22) aufweist, an welchen das zweite Filterelement (200) montierbar ist, wobei die Gehäuse-Eingriffsmittel (22) als sich in axialer Richtung erstreckende Zapfen ausgebildet sind, die in die Öffnungen (214) der zweiten Eingriffsmittel (210) eingreifen.

2. Flachfilterelement (200), insbesondere Sekundärelement (200), insbesondere zur Gasfiltration, mit einem Filtermediumkörper (202) und einer Dichteinrichtung (204) zum radialen Abdichten des Filterelements (200) gegenüber einem Filtergehäuse (10), wobei eine Durchströmungsrichtung eines zu filternden Fluids durch den Filtermediumkörper (202) senkrecht zu einer von der Dichteinrichtung (204) aufgespannten Ebene (208) positioniert ist, und wobei die Dichteinrichtung (204) als Platte (216) mit einer randseitig umlaufenden Dichtung (218) ausgebildet ist,
**dadurch gekennzeichnet, dass**
die Dichteinrichtung (204) zwei sich in axialer Richtung senkrecht zu der Ebene (208) erstreckende Eingriffsmittel (210) aufweist, welche in einem Bereich (206) der Dichteinrichtung (204) außerhalb des Filtermediumkörpers (202) angeordnet sind, und dass die Eingriffsmittel (210) als Zapfen ausgebildet sind, wobei die Eingriffsmittel (210) derart ausgebildet sind, dass sie mit als Ausnehmungen ausgebildeten Eingriffsmitteln (110) eines in axialer Richtung folgenden Filterelements (100) ineinander eingreifen können, und dass die Eingriffsmittel (210) hohl mit einer Öffnung (214) an einer Basis ausgebildet sind, sodass zapfenförmige Gehäuse-Eingriffsmittel (22) an einem Boden des Gehäuses (10) in die Öffnungen (214) an der Basis der Eingriffsmittel (210) eingreifen können.

3. Flachfilterelement nach Anspruch 2, **dadurch gekennzeichnet, dass** das wenigstens eine Eingriffsmittel (210) eine Demontagehilfe (220) aufweist.

4. Filterelementanordnung (300) zum Einbringen in ein Filtersystem nach Anspruch 1, mit einem ersten Filterelement (100), insbesondere Hauptelement (100), mit einem ersten Filtermediumkörper (102), dessen Wandung von dem zu reinigenden Fluid bezogen auf eine Längsachse (50) des Filtermediumkörpers (102) in Radialrichtung durchströmbar ist, mit jeweils einer Endscheibe (150, 160) an den gegenüberliegenden Stirnseiten des Filtermediumkörpers (102), wobei an der äußeren Stirnseite (162) einer geschlossenen Endscheibe (160) des ersten Filterelements (100) zwei sich in axialer Richtung parallel zur Längsachse (50) erstreckende erste Eingriffsmittel (110) angeordnet sind, wobei die ersten Eingriffsmittel (110) als Ausnehmungen ausgebildet sind und wobei die ersten Eingriffsmittel (160) in einem Randbereich (164) der Endscheibe (160) angeordnet sind, wo der Filtermediumkörper (202) eingebettet ist,
und mit einem zweiten Filterelement (200), insbesondere Sekundärelement (200), nach Anspruch 2 oder 3, wobei die ersten Eingriffsmittel (110) des ersten Filterelements (100) und die zweiten Eingriffsmittel (210) des zweiten Filterelements (200) ineinander eingreifen.

5. Filterelementanordnung nach Anspruch 4, **dadurch gekennzeichnet, dass** bei zusammengesetztem ersten und zweiten Filterelement (100, 200) die Stirnseite (162) der Endscheibe (160) mit den ersten Eingriffsmitteln (110) von einer der ersten Stirnseite (162) zugewandten zweiten Stirnseite (212) des zweiten Filterelements (200) mit einem lichten Abstand (302) beabstandet ist.

## Claims

1. A filter system (400), in particular for gas filtration, with a filter element assembly (300) consisting of a first filter element (100), in particular a main element, and a second filter element (200), in particular a secondary element, and with a housing (10) in which the filter element assembly (300) is disposed in a replaceable manner,
the first filter element (100) featuring a filter medium body (102), the wall of which can be traversed radially by a fluid to be purified relative to a longitudinal axis (50) of the filter medium body (102), with a respective end disc (150, 160) on the opposite front faces of the filter medium body (102),
the second filter element (200) featuring a filter medium body (202) and a sealing device (204) for radially sealing the filter element (200) against the filter housing (10), wherein a through-flow direction of the fluid to be filtered through the filter medium body (202) is positioned perpendicular to a plane (208) spanned by the sealing device (204), wherein the sealing device (204) is designed as a plate (216) with a circumferential seal (218) along its edge, and wherein the filter element (200) is designed as a flat filter element,
wherein two first engagement means (110) extending in the axial direction parallel to the longitudinal axis (50) are disposed on the outer front face (162) of a closed end disc (160) of the first filter element (100), wherein the first engagement means (110) are formed as recesses, and wherein the first engagement means (160) are disposed in an edge region (164) of the end disc (160) where the filter medium body (202) is incorporated,
wherein the sealing device (204) of the second filter element (200) features two second engagement means (210) extending in an axial direction perpendicular to the plane (208), wherein the second engagement means (210) are disposed in an area (206) of the sealing device (204) outside the filter medium body (202), and wherein the second engagement means (210) are formed as hollow pins with an orifice (214) at a base,
wherein the first and second engagement means (110, 210) engage with one another, and wherein the housing (10) features, at a bottom of a housing component (14), two housing engagement means (22) to which the second filter element (200) can be mounted, wherein the housing engagement means (22) are formed as pins extending in the axial direction and engaging the orifices (214) of the second engagement means (210).

2. A flat filter element (200), in particular a secondary element (200), in particular for gas filtration, with a filter medium body (202) and a sealing device (204) for radially sealing the filter element (200) against a filter housing (10),
wherein a through-flow direction of a fluid to be filtered through the filter medium body (202) is positioned perpendicular to a plane (208) spanned by the sealing device (204), and wherein the sealing device (204) is formed as a plate (216) with a seal (218) extending circumferentially along the edge,
**characterized in that**
the sealing device (204) features two engagement means (210) extending in an axial direction perpendicular to the plane (208), which are disposed in an area (206) of the sealing device (204) outside the filter medium body (202), and that the engagement means (210) are formed as pins, wherein the engagement means (210) are configured such that they can engage with engagement means (110) formed as recesses of a subsequent filter element (100) in the axial direction, and that the engagement means (210) are hollow with an orifice (214) at a base, such that pin-shaped housing engagement means (22) at a bottom of the housing (10) can engage with the orifices (214) at the base of the engagement means (210).

3. The flat filter element according to claim 2, **characterized in that** the at least one engagement means (210) features a removal aid (220).

4. A filter element assembly (300) for insertion into a filter system according to claim 1, with a first filter element (100), in particular a main element (100), with a first filter medium body (102), the wall of which can be flowed through by the fluid to be purified in a radial direction relative to a longitudinal axis (50) of the filter medium body (102), with a respective end disc (150, 160) on the opposite front faces of the filter medium body (102), wherein two first engagement means (110) extending in the axial direction parallel to the longitudinal axis (50) are disposed on the outer end face (162) of a closed end plate (160) of the first filter element (100), wherein the first engagement means (110) are formed as recesses and wherein the first engagement means (160) are disposed in an edge region (164) of the end plate (160) where the filter medium body (202) is incorporated,
and with a second filter element (200), in particular a secondary element (200), according to claim 2 or 3, wherein the first engagement means (110) of the first filter element (100) and the second engagement means (210) of the second filter element (200) engage with one another.

5. The filter element assembly according to claim 4, **characterized in that,** when the first and second filter elements (100, 200) are assembled, the front face (162) of the end disc (160) is spaced apart from the first engagement means (110) of a second front face (212) facing the first front face (162) of the second filter element (200) with a clearance (302).

## Revendications

1. Système de filtre (400), en particulier pour la filtration de gaz, avec un agencement d'éléments de filtre (300) constitué d'un premier élément de filtre (100), en particulier un élément principal, et d'un second élément de filtre (200), en particulier un élément secondaire, et avec un boîtier (10) dans lequel l'agencement d'éléments de filtre (300) est disposé de manière interchangeable,
le premier élément de filtre (100) présentant un corps de milieu filtrant (102), dont la paroi peut être traversée dans le sens radial par un fluide à purifier par rapport à un axe longitudinal (50) du corps de milieu filtrant (102), avec respectivement un disque d'extrémité (150, 160) sur les faces frontales opposées du corps de milieu filtrant (102),
le second élément de filtre (200) présentant un corps de milieu filtrant (202) et un dispositif d'étanchéité (204) destiné à assurer l'étanchéité radiale de l'élément de filtre (200) par rapport au boîtier de filtre (10), une direction d'écoulement du fluide à filtrer à travers le corps de milieu filtrant (202) étant positionnée de manière perpendiculaire à un plan (208) tendu par le dispositif d'étanchéité (204), le dispositif d'étanchéité (204) étant réalisé sous la forme d'une plaque (216) pourvue d'un joint d'étanchéité (218) périphérique sur son bord, et l'élément de filtre (200) étant réalisé sous la forme d'un élément de filtre plat,
deux premiers moyens d'engagement (110) s'étendant dans la direction axiale parallèlement à l'axe longitudinal (50) étant disposés sur la face frontale extérieure (162) d'un disque d'extrémité fermé (160) du premier élément de filtre (100), les premiers moyens d'engagement (110) étant réalisés sous forme d'évidements, et les premiers moyens d'engagement (160) étant disposés dans une zone périphérique (164) du disque d'extrémité (160) où le corps de milieu filtrant (202) est incorporé,
le dispositif d'étanchéité (204) du second élément de filtre (200) présentant deux seconds moyens d'engagement (210) s'étendant dans la direction axiale perpendiculairement au plan (208), les seconds moyens d'engagement (210) étant disposés dans une zone (206) du dispositif d'étanchéité (204) à l'extérieur du corps de milieu filtrant (202), et les seconds moyens d'engagement (210) étant réalisés sous forme de tenons creux avec un orifice (214) au niveau d'une base,
les premiers et seconds moyens d'engagement (110, 210) s'engageant l'un dans l'autre,
et le boîtier (10) présentant, au niveau d'un fond d'un composant de boîtier (14), deux moyens d'engagement de boîtier (22) sur lesquels le second élément de filtre (200) peut être monté, les moyens d'engagement du boîtier (22) étant réalisés sous forme de tenons s'étendant dans la direction axiale s'engageant dans les orifices (214) des seconds moyens d'engagement (210).

2. Élément de filtre plat (200), en particulier élément secondaire (200), en particulier pour la filtration de gaz, avec un corps de milieu filtrant (202) et un dispositif d'étanchéité (204) destiné à assurer l'étanchéité radiale de l'élément de filtre (200) par rapport à un boîtier de filtre (10), la direction d'écoulement d'un fluide à filtrer à travers le corps de milieu filtrant (202) étant positionnée de manière perpendiculaire à un plan (208) tendu par le dispositif d'étanchéité (204), et le dispositif d'étanchéité (204) étant réalisé sous la forme d'une plaque (216) avec un joint d'étanchéité (218) périphérique sur son bord,
**caractérisé en ce que**
le dispositif d'étanchéité (204) présente deux moyens d'engagement (210) s'étendant dans la direction axiale perpendiculairement au plan (208) et qui sont disposés dans une zone (206) du dispositif d'étanchéité (204) à l'extérieur du corps de milieu filtrant (202), et **en ce que** les moyens d'engagement (210) sont réalisés sous forme de tenons, les moyens d'engagement (210) étant conçus de manière à pouvoir s'engager avec des moyens d'engagement (110), réalisés sous forme d'évidements, d'un élément de filtre (100) suivant dans la direction axiale, et **en ce que** les moyens d'engagement (210) sont creux avec un orifice (214) au niveau d'une base, de sorte que des moyens d'engagement de boîtier en forme de tenons (22) situés au fond du boîtier (10) peuvent s'engager dans les orifices (214) au niveau de la base des moyens d'engagement (210).

3. Élément de filtre plat selon la revendication 2, **caractérisé en ce que** le moyen d'engagement (210), au moins au nombre d'un, présente un dispositif d'aide au démontage (220).

4. Agencement d'éléments de filtre (300) destiné à être inséré dans un système de filtre selon la revendication 1, avec un premier élément de filtre (100), en particulier un élément principal (100), avec un premier corps de milieu filtrant (102) dont la paroi peut être traversée par le fluide à purifier dans le sens radial par rapport à un axe longitudinal (50) du corps de milieu filtrant (102), avec respectivement un disque d'extrémité (150, 160) sur les faces frontales opposées du corps de milieu filtrant (102), deux premiers moyens d'engagement (110) s'étendant dans la direction axiale parallèlement à l'axe longitudinal (50) étant disposés sur la face frontale extérieure (162) d'un disque d'extrémité fermé (160) du premier élément de filtre (100), les premiers moyens d'engagement (110) étant réalisés sous forme d'évidements et les premiers moyens d'engagement (160) étant disposés dans une zone périphérique (164) du disque d'extrémité (160) où le corps de milieu filtrant (202) est incorporé,
et avec un second élément de filtre (200), en particulier un élément secondaire (200), selon la revendication 2 ou 3, les premiers moyens d'engagement (110) du premier élément de filtre (100) et les seconds moyens d'engagement (210) du second élément de filtre (200) s'engageant les uns dans les autres.

5. Agencement d'éléments de filtre selon la revendication 4, **caractérisé en ce que,** lorsque les premier et second éléments de filtre (100, 200) sont assemblés, la face frontale (162) du disque d'extrémité (160) est espacée des premiers moyens d'engagement (110) d'une seconde face frontale (212) du second élément de filtre (200) tournée vers la première face frontale (162) par un espace libre (302).
